# EUROPÄISCHE PATENTSCHRIFT

(11) **EP 3 379 447 B1**
(45) Veröffentlichungstag und Bekanntmachung des Hinweises auf die Patenterteilung: **27.04.2022**
(21) Anmeldenummer: 17162319.2
(22) Anmeldetag: 22.03.2017
(51) Int. Cl.: G06F 21/64, H04L 9/32

(54) **VERFAHREN UND VORRICHTUNG ZUM MANIPULATIONSSICHEREN SPEICHERN VON INFORMATIONEN BEZÜGLICH OBJEKTBEZOGENER MASSNAHMEN**
METHOD AND DEVICE FOR TAMPER-PROOF STORING OF INFORMATION RELATING TO OBJECT-SPECIFIC MEASURES
PROCÉDÉ ET DISPOSITIF D'ENREGISTREMENT INVIOLABLE D'INFORMATIONS PAR RAPPORT À DES MESURES RELATIVES À UN OBJET

(43) Veröffentlichungstag der Anmeldung: 26.09.2018
(73) Patentinhaber: Siemens Aktiengesellschaft, 80333 München (DE)
(72) Erfinder: FALK, Rainer, 85586 Poing (DE)

(56) Entgegenhaltungen:
- WO-A1-2017/004527
- US-A1- 2016 261 690
- US-A1- 2017 031 676
- US-A1- 2017 046 693

## Beschreibung

Die Erfindung betrifft ein Verfahren und ein System zum manipulationssicheren Speichern von Informationen bezüglich objektbezogener Maßnahmen, die an einem Objekt, beispielsweise einem Gerät, vorgenommen werden oder die durch das Objekt selbst vorgenommen werden.

Objekte, beispielsweise Geräte, Gerätekomponenten oder sonstige Produkte, können einen Objektdatenspeicher aufweisen, um verschiedene Informationen hinsichtlich des betreffenden Objektes abzuspeichern. Beispielsweise können in dem Objektdatenspeicher eines Objektes Daten hinsichtlich der Identität des Objektes oder sonstiger das Objekt betreffende Vorgänge hinterlegt werden. In einem Objektdatenspeicher des Objektes können beispielsweise Diagnosedaten, Wartungsinformationsdaten, Reparaturinformationsdaten oder Eigentümerübergänge gespeichert sein. Der Objektdatenspeicher eines Objektes kann in dem Objekt integriert sein bzw. mit dem Objekt physikalisch verbunden sein. Alternativ kann der Objektdatenspeicher sich auch entfernt von dem Objekt befinden und dem Objekt zugeordnet sein. Beispielsweise können Informationen bzw. Daten hinsichtlich des Objektes als sogenannter digitaler Zwilling bzw. als Teil eines digitalen Zwillings auf einem entfernten Computersystem, insbesondere einem Webservice oder einem IoT-Backendsystem, gespeichert sein. Insbesondere bei sicherheitskritischen Anwendungen ist es notwendig, die in dem Objektdatenspeicher eines Objektes abgespeicherten Daten vor Manipulation zu schützen. Die US 2017/031676 A1 offenbart ein Blockkettenverteilungsverfahren von Computerdaten. Die US 2016/261690 A1 beschreibt, dass eine verteilte Blockchain verwendet werden kann, um darüber Updates für mehrere Geräte bereitzustellen. Die Blockchain befindet sich in beiden Fällen außerhalb des betrachteten Geräts, und sie wird von mehreren Geräten verwendet.

Es ist daher eine Aufgabe der vorliegenden Erfindung, ein Verfahren und ein System zur manipulationssicheren Speicherung von Informationen bezüglich objektbezogener Maßnahmen zu schaffen.

Diese Aufgabe wird erfindungsgemäß durch ein Verfahren und ein System zum manipulationssicheren Speichern von Informationen bezüglich objektbezogener Maßnahmen mit den in den Patentansprüchen angegebenen Merkmalen gelöst.

Offenbart ist demnach ein Verfahren zur manipulationssicheren Speicherung von Informationen bezüglich objektbezogener Maßnahmen,
wobei die das Objekt betreffenden Maßnahmen als Transaktionen in Transaktionsblöcken enthalten sind, die miteinander in einer Transaktionsblockkette des Objektes verkettet werden, die in einem zu dem Objekt zugeordneten Objektdatenspeicher gespeichert wird. Nach einem Startschritt wird eine Transaktion erfasst. Jede Transaktion enthält einen Validierungsprogrammcode, die Regeln definiert, die angeben, welche Transaktionen zulässig sind.

Ein zusätzlicher Transaktionsblock kann nach seiner erfolgreichen Validierung mit dem am Ende der Transaktionsblockkette des Objektes befindlichen letzten Transaktionsblock verkettet werden.

Die Transaktionsblockkette eines Objektes kann mittels eines Lesegerätes aus dem Objektdatenspeicher des Objektes ausgelesen und die in den Transaktionsblöcken der ausgelesenen Transaktionsblockkette enthaltenen Transaktionen werden anhand ihres jeweiligen Validierungsprogrammcodes als zulässig verifiziert.

Eine anhand ihres Validierungsprogrammcodes als zulässig verifizierte Transaktion zum Zeitpunkt des Einschreibens in den Objektdatenspeicher des Objektes und/oder zum Zeitpunkt des Auslesens aus dem Objektdatenspeicher des Objektes bestätigt die Vornahme der Maßnahme an dem Objekt.

Dies bietet die Vorteile, dass das erfindungsgemäße Verfahren bei einer Vielzahl unterschiedlicher Anwendungsfälle einsetzbar ist und die Manipulationssicherheit erhöht wird.

Die Transaktionsblöcke der Transaktionsblockkette des Objektes können über eine kryptographische Hashfunktion miteinander verkettet werden. Diese Ausführungsform bietet den Vorteil, dass die Manipulationssicherheit weiter erhöht wird.

Für jedes Objekt kann eine zugehörige individuelle Hashfunktion verwendet werden. Bei dieser Ausführungsform wird die Manipulationssicherheit weiter erhöht.

Für mehrere Objekte einer Gruppe von Objekten kann eine zugehörige Hashfunktion verwendet werden. Dies bietet den Vorteil, dass ein Verwaltungsaufwand bei dem erfindungsgemäßen Verfahren reduziert wird.

Die Transaktionsblöcke der Transaktionsblockkette des Objektes können über Zeigeradressen miteinander verkettet werden. Dies bietet den Vorteil einer einfachen Implementierung.

Jeder Transaktionsblock kann mindestens eine Transaktion umfassen, die eine an dem Objekt vorgenommene Maßnahme oder eine durch das Objekt selbst vorgenommene Maßnahme angibt. Diese Ausführungsform bietet den Vorteil, dass Speicherplatz eingespart werden kann.

Ein zusätzlicher Transaktionsblock für die Transaktionsblocckette des Objektes kann automatisch generiert, sobald ein vorgegebener Zeitraum endet. Dies bietet den Vorteil, dass das Management der gespeicherten Daten vereinfacht wird.

Ein zusätzlicher Transaktionsblock für die Transaktionsblocckette des Objektes kann automatisch generiert werden, sobald die Anzahl der in dem letzten Transaktionsblock der Transaktionsblockkette enthaltenen Transaktionen einen Schwellenwert erreicht. Dies bietet ebenfalls den Vorteil, dass das Management bzw. die Verwaltung der Daten vereinfacht wird.

Ein zusätzlicher Transaktionsblock für die Transaktionsblocckette des Objektes automatisch kann generiert werden, sobald ein bestimmtes Ereignis detektiert wird. Dies bietet ebenfalls den Vorteil, dass das Management bzw. die Verwaltung der Daten vereinfacht wird.

Ein zusätzlicher Transaktionsblock für die Transaktionsblocckette des Objektes kann automatisch generiert werden, sobald über eine Schnittstelle ein entsprechender Nutzerbefehl eingegeben wird. Dies bietet den Vorteil, dass ein Nutzer die Möglichkeit hat, die Generierung eines zusätzlichen Transaktionsblocks zu veranlassen.

Eine Transaktion aus einer Gruppe vorgegebener für das Objekt zulässiger Transaktionen kann selektiert und in dem letzten Transaktionsblock der Transaktionsblockkette gespeichert werden. Dies bietet den Vorteil, dass Transaktionen vordefiniert werden können.

Jeder Transaktionsblock der Transaktionsblockkette einen Zeitstempel, eine digitale Signatur und/oder einen Proof-of-Work-Nachweis kann enthalten. Dies bietet den Vorteil, dass die Manipulationssicherheit weiter erhöht wird.

Jede Transaktion enthält einen Validierungsprogrammcode. Dies bietet den Vorteil, dass das erfindungsgemäße Verfahren flexibel für verschiedene Anwendungsfälle bzw. Use Cases anpassbar ist. Ein zusätzlicher Transaktionsblock kann als gültig validiert werden, falls alle in dem Transaktionsblock enthaltenen Transaktionen mittels eines zugehörigen Validierungsprogrammcodes als zulässig verifiziert werden. Dies bietet den Vorteil, dass die Manipulationssicherheit weiter erhöht wird.

Eine oder jede Transaktion eines Transaktionsblockes kann einen öffentlichen Schlüssel eines Objektinhabers und eine Angabe eines für eine digitale Signatur verwendeten Schlüsselalgorithmus aufweisen. Dies bietet ebenfalls den Vorteil, dass die Manipulationssicherheit weiter erhöht wird.

Eine anhand ihres Validierungsprogrammcodes als zulässig verifizierte Transaktion zum Zeitpunkt des Einschreibens in den Objektdatenspeicher des Objektes und/oder zum Zeitpunkt des Auslesens aus dem Objektdatenspeicher des Objektes kann automatisch die entsprechende Maßnahme an dem Objekt auslösen. Dies bietet ebenfalls den Vorteil, dass das erfindungsgemäße Verfahren bei einer Vielzahl unterschiedlicher Anwendungsfälle flexibel einsetzbar ist.

Mehrere Transaktionsblöcke der Transaktionsblockkette eines Objektes können automatisch zu einem Transaktionsblock zusammengefasst werden, sobald ein vorgegebener Zeitraum endet oder die Anzahl der in der Transaktionsblockkette enthaltenen Transaktionsblöcke einen Schwellenwert erreicht oder in Reaktion auf ein erfasstes Ereignis, insbesondere Speicherknappheit des Objektdatenspeichers, oder in Reaktion auf einen eingegebenen Nutzerbefehl. Dies bietet den besonderen Vorteil, dass der benötigte Speicherplatz minimiert wird.

Offenbart ist ein System zur Steuerung und Überwachung von Maßnahmen, die an Objekten vornehmbar oder durch Objekte selbst vornehmbar sind, wobei jedem Objekt des Systems ein Objektdatenspeicher zugeordnet ist, wobei die das Objekt betreffenden Maßnahmen als Transaktionen in Transaktionsblöcken enthalten sind, welche miteinander in einer Transaktionsblockkette des Objektes verkettet sind, die in dem Objektdatenspeicher des Objektes gespeichert ist.

Die Objekte können Hardwarekomponenten, insbesondere Geräte, aufweisen. Dies bietet den Vorteil, dass das erfindungsgemäße System insbesondere bei einer industriellen Anlage einsetzbar ist.

Die Objekte können Softwarekomponenten, insbesondere Dienstprogramme, aufweisen. Dies bietet den Vorteil, dass das erfindungsgemäße System auch bei einem Softwaresystem verwendet werden kann.

Im Weiteren werden Beispiele des Verfahrens und des Systems unter Bezugnahme auf die beigefügten Figuren im Detail beschrieben.

Es zeigen:
- Fig. 1: ein schematisches Blockdiagramm zur Erläuterung der Funktionsweise des erfindungsgemäßen Verfahrens und der erfindungsgemäßen Vorrichtung zur manipulationssicheren Speicherung von Informationen bezüglich objektbezogener Maßnahmen;
- Fig. 2: eine schematische Darstellung zur Erläuterung möglicher Ausführungsformen eines erfindungsgemäßen Systems zur Steuerung und Überwachung von objektbezogenen Maßnahmen;
- Fig. 3: eine schematische Darstellung einer bei dem erfindungsgemäßen Verfahren und dem erfindungsgemäßen System verwendbaren Transaktionsblockkette;
- Fig. 4: eine schematische Darstellung eines Ausführungsbeispiels einer innerhalb eines Transaktionsblockes der Transaktionsblockkette enthaltenen Transaktion, wie sie bei dem erfindungsgemäßen Verfahren und dem erfindungsgemäßen System verwendet werden kann;
- Fig. 5: ein Ablaufdiagramm zur Darstellung eines bei dem erfindungsgemäßen Verfahren vorgenommenen Schreibvorganges;
- Fig. 6: ein Ablaufdiagramm zur Darstellung eines bei dem erfindungsgemäßen Verfahren vorgenommenen Lesevorganges.

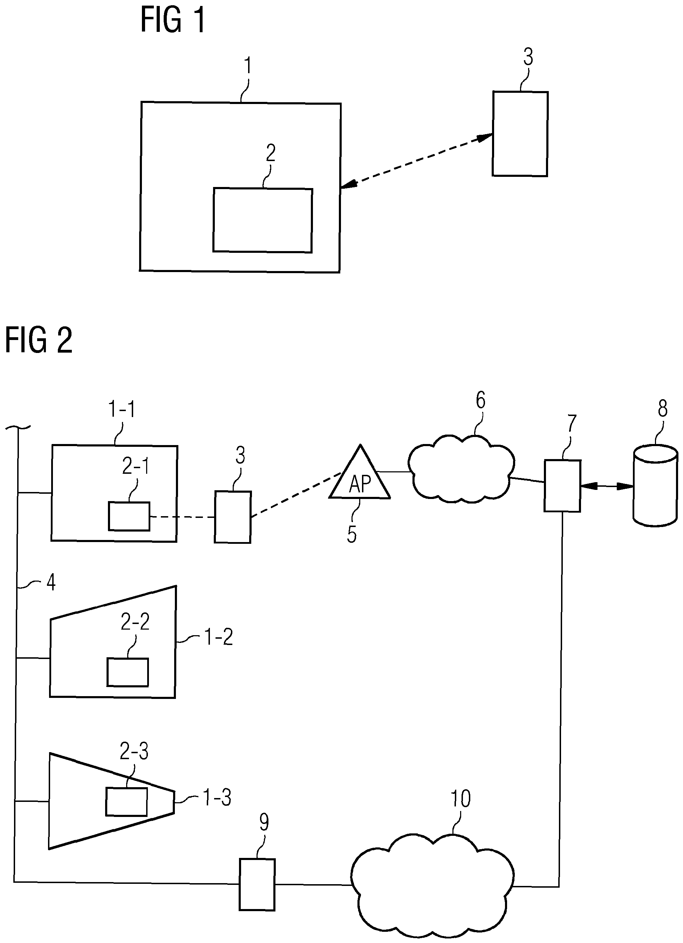

Wie man aus Fig. 1 erkennen kann, verfügt ein Objekt 1 über einen zugeordneten Objektdatenspeicher 2. Bei dem dargestellten Ausführungsbeispiel ist der Objektdatenspeicher 2 des Objektes 1 in dem Objekt 1 integriert bzw. enthalten.

Alternativ kann der Objektdatenspeicher 2 auch entfernt von dem zugehörigen Objekt 1 vorgesehen sein, beispielsweise in einem entfernten Datenspeicher oder einer entfernten Datenbank. Der Objektdatenspeicher 2 ist beispielsweise über eine ID des Objektes 1 dem Objekt zuordbar. In dem dargestellten Ausführungsbeispiel gemäß Fig. 1 können mithilfe eines tragbaren Schreib- und Lesegerätes 3 Daten in den Objektdatenspeicher 2 eingeschrieben und/oder Daten aus dem Objektdatenspeicher 2 ausgelesen werden. Bei dem Objekt 1 kann es sich um ein Gerät handeln, beispielsweise um einen intelligenten Antrieb (smart drive). Bei dem Objekt 1 kann es sich allgemein um eine Hardwarekomponente oder um mehrere zusammengebaute Hardwarekomponenten handeln. Beispielsweise handelt es sich bei dem Objekt 1 um ein Gerät einer industriellen Anlage. Beispiele für Objekte, die über einen Objektdatenspeicher 2 verfügen können, sind Steuergeräte, speicherprogrammierbare Steuerungen, Sensoren, Aktuatoren, Ein-Ausgabe-Module, Getriebe, Turbinen, Motoren, Umrichter, Computertomographen, Mammographiegeräte, Ultraschallgeräte oder Schutzschalter. Alternativ kann es sich bei dem Objekt 1 auch um eine Softwarekomponente handeln, insbesondere um ein Dienstprogramm. Beispielsweise kann es sich bei der Softwarekomponente um einen Werkdienst, einen Verwaltungsdienst oder beispielsweise einen Cloud Service handeln. Jeder Softwarekomponente des Systems ist dabei ein Objektdatenspeicher 2 zuordbar.

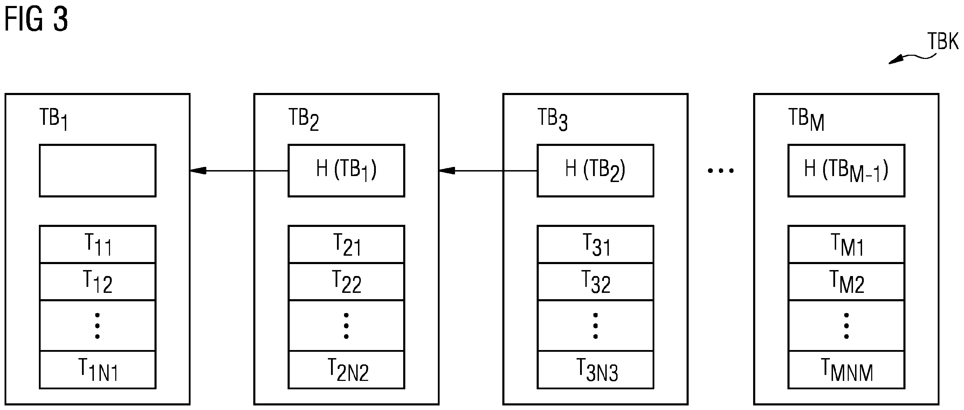

In dem Objektdatenspeicher 2 eines Objektes 1 befindet sich mindestens für das Objekt 1 vorgesehene Transaktionsblockkette TBK, wie sie beispielsweise in Fig. 3 dargestellt ist. Jedwede das Objekt 1 betreffende Maßnahme wird als Transaktion T₁₁, ... , T_{1N1}, T₂₁, ... T_{2N2}, ..., T_{M1}, ...T_{MNM} in einem Transaktionsblock TB der Transaktionsblockkette TBK vermerkt. Die das Objekt 1 betreffenden Maßnahmen sind als Transaktionen T₁₁, ... , T_{1N1}, T₂₁, ... T_{2N2}, ..., T_{M1}, ...T_{MNM} in Transaktionsblöcken TB enthalten, die miteinander in der Transaktionsblocckette TBK des betreffenden Objektes 1 verkettet werden. Diese Transaktionsblockkette TBK wird in einem zu dem Objekt 1 zugeordneten Objektdatenspeicher 2 gespeichert. Jeder Transaktionsblock TB der Transaktionsblockkette TBK umfasst mindestens eine Transaktion T, die eine an dem Objekt 1 vorgenommene Maßnahme oder eine durch das Objekt 1 selbst vorgenommene Maßnahme angibt.

Bei dem in Fig. 3 dargestellten Ausführungsbeispiel werden die Transaktionsblöcke TB₁, ... , TB_{M-1} der Transaktionsblocckette, TBK, des Objektes 1 über eine kryptographische Hashfunktion H miteinander verkettet. Der Transaktionsblock TB₁, ... , TB_{M-1}, welcher eine Datenstruktur bildet, umfasst zumindest einen Hashwert, der abhängig von dem vorangehenden Transaktionsblock TB₁, ... , TB_{M-1} gebildet ist. Jeder Transaktionsblock TB₁, ... , TB_{M-1} enthält eine oder mehrere Transaktionen T₁₁, ... , T_{1N1}, T₂₁, ... T_{2N2}, ..., T_{M1}, ...T_{MNM} , wie in Fig. 3 dargestellt. Jede Transaktion T₁₁, ... , T_{1N1}, T₂₁, ... T_{2N2}, ..., T_{M1}, ...T_{MNM} innerhalb eines Transaktionsblockes TB gibt eine an dem Objekt 1 vorgenommene Maßnahme, beispielsweise eine Wartungsmaßnahme, oder eine durch das Objekt 1 selbst vorgenommene Maßnahme, beispielsweise einen Produktionsschritt, an. Bei einer möglichen Ausführungsform kann ein Hashwert abhängig von den Transaktionen T₁₁, ... , T_{1N1}, T₂₁, ... T_{2N2}, ..., T_{M1}, ...T_{MNM} gebildet werden. Die Anzahl der in einem Transaktionsblock TB enthaltenen Transaktionen T₁₁, ... , T_{1N1}, T₂₁, ... T_{2N2}, ..., T_{M1}, ...T_{MNM} kann unterschiedlich sein. Beispielsweise enthält der erste Transaktionsblock TB₁ der in Fig. 3 dargestellten Transaktionsblockkette, TBK, N1 Transaktionen T₁₁, ... , T_{1N1} und der zweite Transaktionsblock TB₂ der Transaktionsblockkette, TBK, N2 Transaktionen T₂₁, ... T_{2N2}. Jeder Transaktionsblock TB₁, ... , TB_{M-1} enthält mindestens eine Transaktion T₁₁, ... , T_{1N1}, T₂₁, ... T_{2N2}, ..., T_{M1}, ...T_{MNM} hinsichtlich einer objektbezogenen Maßnahme.

Bei einer möglichen Ausführungsform wird für jedes Objekt 1 eine zugehörige individuelle Hashfunktion H verwendet. Bei einer alternativen Ausführungsform können für mehrere Objekte einer Gruppe von Objekten eine zugehörige Hashfunktion F verwendet werden. Bei der in Fig. 3 dargestellten Ausführungsform sind die Transaktionsblöcke TB₁, ... , TB_{M-1} der Transaktionsblockkette, TBK, miteinander über eine kryptographische Hashfunktion H verkettet. Bei einer alternativen Ausführungsform können die Transaktionsblöcke TB₁, ... , TB_{M-1} der Transaktionsblockkette, TBK, des Objektes 1 auch über Zeigeradressen miteinander verkettet sein.

Bei der in Fig. 3 dargestellten Ausführungsform sind die Transaktionsblöcke TB₁, ... , TB_{M-1} der Transaktionsblockkette, TBK, in einer Richtung verkettet. Bei einer weiteren alternativen Ausführungsform können die Transaktionsblöcke TB₁, ... , TB_{M-1} der Transaktionsblockkette, TBK, auch doppelt in beiden Richtungen miteinander verkettet sein. Dies erlaubt das Einfügen und Herausnehmen von Transaktionsblöcken TB₁, ... , TB_{M-1} aus der Transaktionsblockkette, TBK.

Bei einer möglichen Ausführungsform des erfindungsgemäßen Systems und des erfindungsgemäßen Verfahrens wird ein zusätzlicher Transaktionsblock TB₁, ... , TB_{M-1} für die Transaktionsblockkette, TBK, des Objektes 1 automatisch generiert, sobald ein bestimmter Umstand eintritt.

Bei einer möglichen Ausführungsform wird ein zusätzlicher Transaktionsblock TB₁, ... , TB_{M-1} für die Transaktionsblocckette, TBK, des Objektes 1 automatisch generiert, sobald ein vorgegebener Zeitraum endet. Beispielsweise wird automatisch ein zusätzlicher Transaktionsblock TB₁, ... , TB_{M-1} für die Transaktionsblockkette, TBK, in periodischen Zeitabständen automatisch generiert, beispielsweise alle 24 Stunden.

Bei einer weiteren möglichen Ausführungsform des erfindungsgemäßen Verfahrens wird ein zusätzlicher Transaktionsblock TB₁, ... , TB_{M-1} für die Transaktionsblockkette, TBK, eines Objektes 1 automatisch generiert, sobald die Anzahl der in dem letzten Transaktionsblock TB_{M} der Transaktionsblockkette, TBK, enthaltenen Transaktion T_{M1}, ...T_{MNM} einen bestimmten Schwellenwert erreicht oder einen gewissen Speicherplatz einnimmt.

Bei einer weiteren möglichen Ausführungsform des erfindungsgemäßen Verfahrens wird ein zusätzlicher Transaktionsblock TB₁, ... , TB_{M-1} für die Transaktionsblockkette, TBK, des Objektes 1 automatisch generiert, sobald ein bestimmtes Ereignis detektiert wird. Hierzu kann das Objekt 1 beispielsweise über Sensoren verfügen, um Ereignisse zu detektieren. Das Ereignis kann auch beispielsweise in einer Zustandsänderung des Objektes 1 liegen. Bei dem detektierten Ereignis, welches die Generierung eines Transaktionsblockes TB₁, ... , TB_{M-1} hervorrief, kann es sich um ein internes Ereignis innerhalb des Objektes 1 oder um ein externes Ereignis außerhalb des Objektes 1 handeln.

Bei einer weiteren möglichen Ausführungsform des erfindungsgemäßen Verfahrens wird ein zusätzlicher Transaktionsblock TB₁, ... , TB_{M-1} für die Transaktionsblockkette, TBK, des Objektes 1 automatisch generiert, sobald ein entsprechender Befehl, insbesondere ein Nutzerbefehl, empfangen wird. Beispielsweise kann ein Nutzer oder Betreiber des Objektes 1 über eine Schnittstelle einen Nutzerbefehl eingeben, der dazu führt, dass automatisch ein zusätzlicher Transaktionsblock TB₁, ... , TB_{M-1} für die Transaktionsblockkette, TBK, des Objektes 1 generiert wird.

Bei einer möglichen Ausführungsform kann eine Transaktion T₁₁, ... , T_{1N1}, T₂₁, ... T_{2N2}, ..., T_{M1}, ...T_{MNM} aus einer Gruppe vorgegebener für das Objekt 1 zulässiger Transaktionen T₁₁, ... , T_{1N1}, T₂₁, ... T_{2N2}, ..., T_{M1}, ...T_{MNM} selektiert und in dem letzten Transaktionsblock TB_{M} der Transaktionsblockkette, TBK, des Objektes 1 gespeichert werden. Unterschiedliche Objekte 1 bzw. Geräte können unterschiedliche zulässige Transaktionen T₁₁, ... , T_{1N1}, T₂₁, ... T_{2N2}, ..., T_{M1}, ...T_{MNM} für objektbezogene Maßnahmen aufweisen. Bei einer möglichen Ausführungsform können die verschiedenen objektbezogenen Maßnahmen einem Nutzer bzw. Betreiber der Anlage angezeigt werden und der Nutzer hat die Möglichkeit, über eine Nutzerschnittstelle objektbezogene Maßnahmen und die zugehörige Transaktion T₁₁, ... , T_{1N1}, T₂₁, ... T_{2N2}, ..., T_{M1}, ...T_{MNM} zu selektieren. Die objektbezogene Maßnahme ist dabei eine von dem Objekt 1 selbst vorgenommene Maßnahme oder eine an dem Objekt 1 vorgenommene Maßnahme.

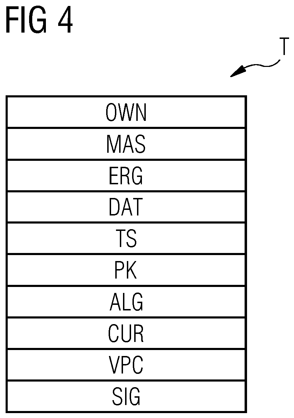

Fig. 4 zeigt eine mögliche beispielhafte Datenstruktur einer Transaktion T, die innerhalb eines Transaktionsblockes TB der Transaktionsblockkette TBK enthalten sein kann. Jede Transaktion T₁₁, ... , T_{1N1}, T₂₁, ... T_{2N2}, ..., T_{M1}, ...T_{MNM} kann eine oder mehrere der in Fig. 4 dargestellten Datenfelder umfassen. Bei einer möglichen Ausführungsform ist der Eigentümer bzw. die zuständige Organisation für das Objekt 1 (ownership) OWN in der Transaktion T₁₁, ... , T_{1N1}, T₂₁, ... T_{2N2}, ..., T_{M1}, ...T_{MNM} enthalten. Weiterhin kann in der Transaktion T₁₁, ... , T_{1N1}, T₂₁, ... T_{2N2}, ..., T_{M1}, ...T_{MNM} die betreffende objektbezogene Maßnahme MAS enthalten sein. Bei einer möglichen Ausführungsform wird auch ein Ergebnis ERG der Maßnahme angegeben. Beispielsweise kann bei einer Maßnahme Selbsttest angegeben werden, ob der Selbsttest erfolgreich ausgeführt wurde (okay) oder nicht (not okay) .

Weiterhin kann in der Transaktion T₁₁, ... , T_{1N1}, T₂₁, ... T_{2N2}, ..., T_{M1}, ...T_{MNM} ein Datum DAT und ein Zeitstempel TS enthalten sein. Das Datum DAT und der Zeitstempel TS sind beispielsweise der Zeitpunkt, an dem die objektbezogene Maßnahme vorgenommen wurde. Weiterhin kann die Transaktion T₁₁, ... , T_{1N1}, T₂₁, ... T_{2N2}, ..., T_{M1}, ...T_{MNM} beispielsweise einen öffentlichen Schlüssel ok, (Public Key) eines Objektinhabers und eine Angabe eines für eine digitale Signatur SIG verwendeten Schlüsselalgorithmus (ALG) angeben. Weiterhin kann beispielsweise eine Kurvenform CUR einer in dem Verschlüsselungsalgorithmus ALG verwendeten elliptischen Kurve angegeben sein.

Die Transaktion T₁₁, ... , T_{1N1}, T₂₁, ... T_{2N2}, ..., T_{M1}, ...T_{MNM} enthält ferner einen Validierungsprogrammcode, VPC, oder ist zumindest einem Validierungsprogrammcode, VPC, zuordbar.

Ein zusätzlicher Transaktionsblock TB₁, ... , TB_{M-1} wird erst nach einer erfolgreichen Validierung mit dem am Ende der Transaktionsblockkette, TBK, des Objektes 1 befindlichen letzten Transaktionsblock TB_{M} verkettet. Dabei geschieht die Validierung mithilfe der zu den Transaktionen T₁₁, ... , T_{1N1}, T₂₁, ... T_{2N2}, ..., T_{M1}, ...T_{MNM} des Transaktionsblockes TB₁, ... , TB_{M-1} zugehörigen Validierungsprogrammcodes, VPC. Ein zusätzlicher Transaktionsblock TB₁, ... , TB_{M-1} wird als gültig validiert, falls alle in dem Transaktionsblock TB₁, ... , TB_{M-1} enthaltenen Transaktionen T₁₁, ... , T_{1N1}, T₂₁, ... T_{2N2}, ... mittels ihres jeweiligen zugehörigen Validierungsprogrammcodes, VPC, als zulässig verifiziert worden sind.

Die Transaktionsblockkette TBK eines Objektes 1 kann mittels eines Lesegerätes aus dem Objektdatenspeicher 2 des Objektes 1 ausgelesen werden. Die in den Transaktionsblöcken TB der ausgelesenen Transaktionsblockkette TBK enthaltenen Transaktionen T₁₁, ... , T_{1N1}, T₂₁, ... T_{2N2}, ..., T_{M1}, ...T_{MNM} können bei einer möglichen Ausführungsform anhand ihres jeweiligen Validierungsprogrammcodes, VPC, als zulässig verifiziert werden.

Eine anhand ihres Validierungsprogrammcodes, VPC, als zulässig verifizierte Transaktion T₁₁, ... , T_{1N1}, T₂₁, ... T_{2N2}, ..., T_{M1}, ...T_{MNM} kann bei einer möglichen Ausführungsform automatisch die entsprechende Maßnahme MAS an dem Objekt 1 auslösen oder die Vornahme der Maßnahme MAS an dem Objekt 1 durch Dritte bestätigen. Bei einer möglichen Ausführungsform wird die Maßnahme MAS zum Zeitpunkt des Einschreibens der zugehörigen Transaktion T₁₁, ... , T_{1N1}, T₂₁, ... T_{2N2}, ..., T_{M1}, ...T_{MNM} in den Objektdatenspeicher 2 des Objektes 1 ausgelöst bzw. bestätigt. Alternativ kann die betreffende Maßnahme MAS auch zum Zeitpunkt des Auslesens der zugehörigen Transaktion T₁₁, ... , T_{1N1}, T₂₁, ... T_{2N2}, ..., T_{M1}, ...T_{MNM} aus dem Objektdatenspeicher 2 des Objektes 1 ausgelöst bzw. bestätigt werden.

Bei einer weiteren möglichen Ausführungsform des erfindungsgemäßen Verfahrens und des erfindungsgemäßen Systems können mehrere Transaktionsblöcke TB₁, ... , TB_{M-1} der Transaktionsblockkette, TBK, eines Objektes 1 automatisch zu einem Transaktionsblock TB₁, ... , TB_{M-1} zusammengefasst werden. Dies geschieht bei einer möglichen Ausführungsform, sobald ein vorgegebener Zeitraum endet. Alternativ kann die Zusammenfassung mehrerer Transaktionsblöcke TB₁, ... , TB_{M-1} erfolgen, sobald die Anzahl der in der Transaktionsblockkette, TBK, enthaltenen Transaktionsblöcke TB einen Schwellenwert erreicht. Weiterhin kann die Zusammenfassung der Transaktionsblöcke TB₁, ... , TB_{M-1} einer Transaktionsblockkette, TBK, in Reaktion auf ein erfasstes Ereignis erfolgen. Beispielsweise werden mehrere Transaktionsblöcke TB₁, ... , TB_{M-1} einer Transaktionsblockkette TBK automatisch zusammengefasst, sobald eine Speicherknappheit des Objektdatenspeichers 2 erkannt wird. Weiterhin können bei einer möglichen Ausführungsform mehrere Transaktionsblöcke TB₁, ... , TB_{M-1} einer Transaktionsblocckette, TBK, des Objektes 1 automatisch in Reaktion auf einen Nutzer- oder Steuerbefehl zusammengefasst werden. Die automatische Zusammenfassung von Transaktionsblöcken TB₁, ... , TB_{M-}1 einer Transaktionsblockkette, TBK, kann ein Überlaufen des Objektdatenspeichers 2 verhindern. Bei einer weiteren möglichen Ausführungsform weist jeder Transaktionsblock TB₁, ... , TB_{M} der Transaktionsblockkette, TBK, einen eigenen Zeitstempel TS, eine digitale Signatur und/oder einen Proof-of-Work-Nachweis auf. Ein Proof-of-Work-Nachweis ist die Lösung einer rechenintensiven Aufgabe, die abhängig vom Blockinhalt zu lösen ist. Eine solche rechenintensive Aufgabe wird auch als kryptographisches Puzzle bezeichnet.

Eine Transaktion T₁₁, ... , T_{1N1}, T₂₁, ... T_{2N2}, ..., T_{M1}, ...T_{MNM} kann einen Programmcode als Smart Contract enthalten. Der Programmcode gibt insbesondere an, welche Transaktionen T₁₁, ... , T_{1N1}, T₂₁, ... T_{2N2}, ..., T_{M1}, ...T_{MNM} zulässig sind. Dadurch lassen sich unterschiedliche Abläufe durch eine gemeinsame Transaktionsblockketten-Infrastruktur flexibel realisieren. Die Verkettung kann bei einer möglichen Ausführungsform mittels eines Hashbaums erfolgen, beispielsweise eines Merkle-Trees oder Patricia-Trees, dessen Wurzelhashwert in einem Transaktionsblock TB₁, ... , TB_{M} hinterlegt wird.

Eine objektbezogene Maßnahme kann beispielsweise eine Wartung oder eine Reparatur eines Gerätes betreffen. Eine zu der Maßnahme zugehörige Transaktion T₁₁, ... , T_{1N1}, T₂₁, ... T_{2N2}, ..., T_{M1}, ...T_{MNM} wird in der Transaktionsblockkette, TBK, des Objektes 1 in dessen Objektdatenspeicher 2 eingetragen. Die entsprechende Transaktion T₁₁, ... , T_{1N1}, T₂₁, ... T_{2N2}, ..., T_{M1}, ...T_{MNM} wird beispielsweise durch den Servicetechniker, welcher die Reparatur bzw. die Wartung vorgenommen hat, digital signiert. Bei einer weiteren Maßnahme kann das gleiche Gerät, beispielsweise ein Antriebsgerät, eine weitere Maßnahme vornehmen, beispielsweise einen Selbsttest durch die in dem Gerät vorhandene Steuereinheit. Erfolgt die Maßnahme, beispielsweise der Selbsttest, erfolgreich, kann die Steuereinheit des Gerätes die Maßnahme (Selbsttest) digital signieren.

Ein weiteres Beispiel für eine Maßnahme ist ein Wechsel des Eigentümers des Objektes 1. Beispielsweise ist zunächst ein erster Eigentümer bzw. Besitzer für ein Objekt 1 innerhalb einer Anlage zuständig und anschließend wechselt die Zuständigkeit zu einem anderen zweiten Besitzer bzw. Eigentümer. Beispielsweise kann eine Maßnahme einen Eintrag enthalten, welcher den Eigentümerwechsel bzw. den Zuständigkeitswechsel angibt. Beispielsweise kann innerhalb einer Transaktion T₁₁, ... , T_{1N1}, T₂₁, ... T_{2N2}, ..., T_{M1}, ...T_{MNM} ein Smart-Contract-Programmcode für den Eigentümerwechsel enthalten sein. In dem Smart Contract kann ein Eigentümer selbst für sich spezifische Regeln vorgeben, nach denen beispielsweise ein Eigentümerwechsel möglich ist, oder beispielsweise nach denen ein Diagnosezugang möglich ist.

Weiterhin kann ein Eigentümer des Objektes 1, beispielsweise eines Gerätes, durch eine Transaktion T₁₁, ... , T_{1N1}, T₂₁, ... T_{2N2}, ..., T_{M1}, ...T_{MNM} Regeln definieren, die den Betrieb bzw. die Nutzung des Gerätes bzw. Objektes 1 betreffen. Beispielsweise kann eine maximal verfügbare Leistung eines Antriebsgerätes 1 sowie die Nutzungsdauer definiert werden. Dies ermöglicht beispielsweise eine nutzungsabhängige Lizensierung des Antriebsgerätes bzw. Objektes 1. Diese Art eines Smart Contracts hat somit Auswirkungen auf die physikalische Nutzung des betreffenden Gerätes, beispielsweise Antriebsgerätes.

Der Objektdatenspeicher 2 kann in einem Modul eines Gerätes vorgesehen sein. Dieses Modul akzeptiert vorzugsweise einen zusätzlichen Transaktionsblock TB₁, ... , TB_{M} innerhalb der Transaktionsblockkette, TBK, nur dann, wenn der zusätzliche Transaktionsblock TB₁, ... , TB_{M} als gültig überprüft wird. Dazu werden die verschiedenen Transaktionen T₁₁, ... , T_{1N1}, T₂₁, ... T_{2N2}, ..., T_{M1}, ...T_{MNM} des Transaktionsblockes TB₁, ... , TB_{M-1} auf ihre Zulässigkeit geprüft bzw. verifiziert. Dies geschieht unter Verwendung der in der Transaktionsblockkette, TBK, vorhandenen Transaktionen T₁₁, ... , T_{1N1}, T₂₁, ... T_{2N2}, ..., T_{M1}, ...T_{MNM} mithilfe deren Validierungsprogrammcodes VPC bzw. Smart Contracts. Demnach wird ein Transaktionsblock TB₁, ... , TB_{M} der Transaktionsblockkette, TBK, nur dann hinzugefügt, wenn er gültig ist. Über Smart Contracts können Eigentümer, Besitzer, Anwender des Gerätes bzw. Objektes 1 nur zulässige Aktionen durchführen, wobei die Regeln hierfür flexibel definierbar sind. Bei einer weiteren möglichen Ausführungsvariante akzeptiert ein in dem Gerät vorhandenes Objektdatenspeichermodul einen zusätzlichen Transaktionsblock TB nur dann, wenn dieser Transaktionsblock TB von einer Transaktionsblockketten-Infrastruktur als gültig bestätigt wird. In dieser Variante prüft das Objektdatenspeichermodul des Gerätes einen Transaktionsblock TB daraufhin, ob er als gültig bestätigt wurde, beispielsweise indem eine gültige Lösung für das kryptographische Puzzle für diesen Transaktionsblock TB vorliegt.

Ein Smart Contract SC in einem Antriebsgerät kann beispielsweise lauten:
Set power limit ("600 Watt");
Allow update (signed by, 673A5342ADFCA701EB7283729AFD980...);
Der Smart Contract SC beschränkt in diesem Beispiel die maximal verfügbare Leistung eines Antriebsgerätes 1 auf 600 Watt. Außerdem definiert der Smart Contract SC einen öffentlichen Schlüssel PK, mit dem die digitale Signatur einer zulässigen Änderung der Nutzungsbeschränkungen überprüfbar ist.

Fig. 2 zeigt ein Ausführungsbeispiel des erfindungsgemäßen Systems zur Steuerung und/oder Überwachung von Maßnahmen, die an Objekten 1 vornehmbar oder durch Objekte 1 selbst vornehmbar sind. Bei dem dargestellten Beispiel sind die verschiedenen Objekte 1 Geräte einer Anlage, die über einen lokalen Datenbus 4 miteinander verbunden sind. Jedes Objekt 1-i der Anlage verfügt über einen integrierten Objektdatenspeicher 2-i. Ein mobil tragbares Schreib- und Lesegerät 3 ermöglicht es einem Nutzer bzw. Betreiber der Anlage, Daten in die verschiedenen Objektdatenspeicher 2-i einzuschreiben und/oder Daten aus den verschiedenen Objektdatenspeichern 2-i der verschiedenen Geräte 1-i auszulesen. Dies geschieht vorzugsweise drahtlos über eine drahtlose Kommunikationsverbindung zwischen dem betreffenden Gerät und dem Schreib-/Lesegerät 3. Bei einer möglichen Ausführungsform handelt es sich bei dem tragbaren Gerät 3 um ein Smartphone eines Nutzers, mit dem ein entsprechendes Anwendungsprogramm ausgeführt wird. Die aus einem Objektdatenspeicher 2 ausgelesenen Daten können bei einer möglichen Ausführungsform von dem tragbaren Schreib-/Lesegerät 3 über einen Zugangspunkt 5 und ein erstes Netzwerk 6 an einen entfernten Server 7 übertragen werden, der Zugriff auf eine zugehörige Datenbank 8 hat.

Weiterhin können das lokale Datennetzwerk der Anlage über ein Gateway 9 und ein weiteres Netzwerk 10 mit dem entfernten Server 7 verbunden sein. Jedem Objekt 1 der Anlage ist eine zugehörige Transaktionsblockkette, TBK, zugeordnet. Diese Transaktionsblockkette, TBK, des Objektes 1 befindet sich bei einer möglichen Ausführungsform in dem lokalen Objektdatenspeicher 2-i des betreffenden Objektes 1. Bei einer möglichen Ausführungsform des erfindungsgemäßen Systems befindet sich ein Zwilling bzw. eine Kopie der Transaktionsblockkette, TBK, des Objektes 1 in der Datenbank bzw. dem Datenspeicher des entfernten Servers 7.

Bei einer weiteren möglichen alternativen Ausführungsform verfügt mindestens ein Teil der verschiedenen Objekte bzw. Geräte 1-i der Anlage nicht über einen integrierten Objektdatenspeicher 2 und die Transaktionsblockkette, TBK, des Objektes 1 befindet sich ausschließlich in einem entsprechenden Speicherbereich der entfernten Datenbank 8. Bei dem in Fig. 2 dargestellten Ausführungsbeispiel handelt es sich bei den Objekten 1-i um Hardwarekomponenten, insbesondere Geräte. Alternativ kann es sich bei den Objekten 1-i auch um Softwarekomponenten handeln, die sich beispielsweise in einem Datenspeicher verschiedener Geräte der Anlage befinden und Anlagenelemente steuern bzw. überwachen. Beispielsweise können auf diese Weise auch Wartungsmaßnahmen an Softwarekomponenten erbracht werden. Die Auswertung der in der Transaktionsblocckette, TBK, enthaltenen Informationen kann lokal vor Ort bei dem jeweiligen Objekt 1 oder entfernt durch den Server 7 des Systems erfolgen. Die Auswertung einer Transaktionsblockkette, TBK, eines Objektes 1 kann beispielsweise durch eine Datenverarbeitungseinheit bzw. Steuereinheit des Systems erfolgen. Beispielsweise können die Transaktionsblockketten, TBK, die in dem Objektdatenspeicher 2-1 des Objektes 1-1 der Anlage gespeichert werden, über das Netzwerk 10 durch den Server 7 zur Auswertung der darin befindlichen Informationen ausgelesen werden. Auf diese Weise erhält der Server 7 die manipulationssicher gespeicherten Informationen über alle objektbezogenen Maßnahmen des Objektes 1-1, beispielsweise Wartungsmaßnahmen, Reparaturmaßnahmen, Selbsttestvorgänge und dergleichen. Weiterhin kann eine in der Anlage tätige Serviceperson mithilfe des Schreib- und Lesegerätes 3 Informationen über verschiedene Objekte bzw. Geräte 1 der Anlage an den zentralen Server 7 über das Netzwerk 6 übertragen. Durch Auswertung der Transaktionsblockkette, TBK, ist es möglich, vorgenommene Manipulationen oder Manipulationsversuche zu erkennen und entsprechende Gegenmaßnahmen einzuleiten. Durch Auswertung der in der Transaktionsblockkette, TBK, enthaltenen Informationen kann beispielsweise eine Historie von objektbezogenen Maßnahmen ermittelt werden. Dies ermöglicht beispielsweise eine prädiktive bzw. vorausschauende Wartung von Objekten 1 einer Anlage.

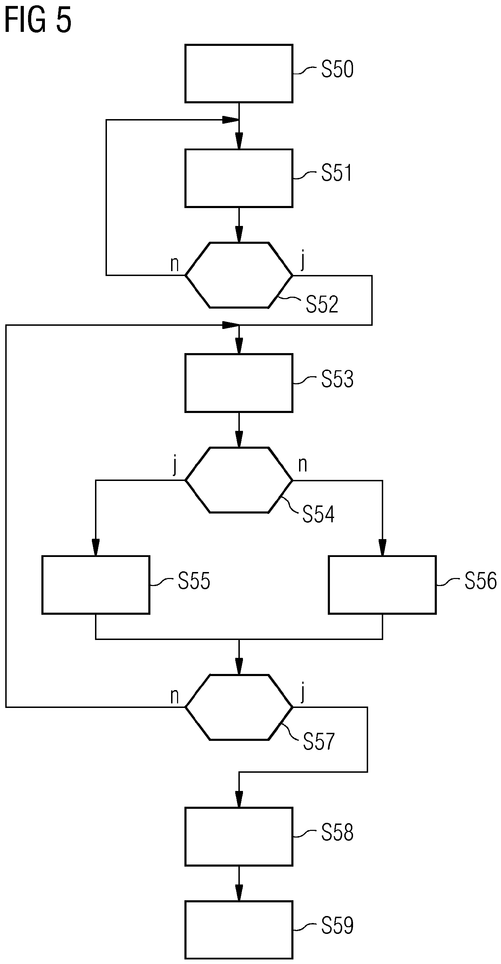

Fig. 5 zeigt ein Ablaufdiagramm zur Darstellung eines Ausführungsbeispiels des bei dem erfindungsgemäßen System vorgenommenen Schreibvorganges. Nach einem Startschritt S50 wird in einem Schritt S51 eine Transaktion T₁₁, ... , T_{1N1}, T₂₁, ... T_{2N2}, ..., T_{M1}, ...T_{MNM} als Kandidat erfasst. In einem weiteren Schritt S52 wird geprüft, ob alle Transaktionen T₁₁, ... , T_{1N1}, T₂₁, ... T_{2N2}, ..., T_{M1}, ...T_{MNM} des betreffenden Objektes 1 erfasst worden sind oder nicht. Im Schritt S53 wird die jeweilige erfasste Transaktion T₁₁, ... , T_{1N1}, T₂₁, ... T_{2N2}, ..., T_{M1}, ...T_{MNM} mithilfe ihres zugehörigen Validierungsprogrammcodes, VPC, auf ihre Gültigkeit überprüft.

Im Schritt S54 wird festgestellt, ob die jeweilige Transaktion T₁₁, ... , T_{1N1}, T₂₁, ... T_{2N2}, ..., T_{M1}, ...T_{MNM} valide bzw. gültig ist. Falls die Validierung erfolgreich durchgeführt wurde, wird die betreffende Transaktion T₁₁, ... , T_{1N1}, T₂₁, ... T_{2N2}, ..., T_{M1}, ...T_{MNM} in den Transaktionsblock TB₁, ... , TB_{M} im Schritt S55 aufgenommen. Ist die Transaktion T₁₁, ... , T_{1N1}, T₂₁, ... T_{2N2}, ..., T_{M1}, ...T_{MNM} nicht valide bzw. gültig, wird sie im Schritt S56 verworfen.

Im weiteren Schritt S57 wird geprüft, ob alle Transaktionen T₁₁, ... , T_{1N1}, T₂₁, ... T_{2N2}, ..., T_{M1}, ...T_{MNM} zum Abschluss eines Transaktionsblockes TB₁, ... , TB_{M} als valide geprüft wurden. Falls dies der Fall ist, kann ein neuer Transaktionsblock TB₁, ... , TB_{M} für die Transaktionsblockkette, TBK, des entsprechenden Objektes 1 im Schritt S58 generiert bzw. erzeugt werden. Ist der Validierungsvorgang noch nicht abgeschlossen, kehrt der Prozess zu Schritt S53 zurück und die nächste Transaktion T₁₁, ... , T_{1N1}, T₂₁, ... T_{2N2}, ..., T_{M1}, ...T_{MNM} wird hinsichtlich ihrer Gültigkeit bzw. Zulässigkeit überprüft. Der Schreibvorgang bzw. Erzeugungsvorgang zur Erzeugung eines Transaktionsblockes TB₁, ... , TB_{M} endet im Schritt S59.

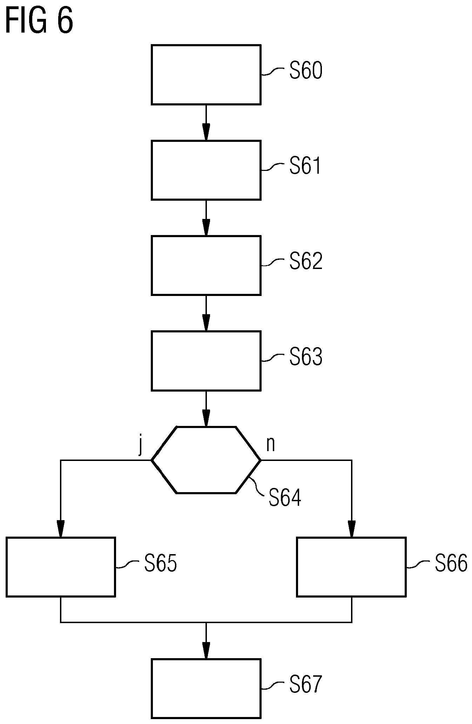

Fig. 6 zeigt das Ablaufdiagramm zur Darstellung eines möglichen Lesevorganges. In einem Startschritt S60 wird eine Transaktionsblockkette, TBK, eines Objektes 1 im S61 aus dem Objektdatenspeicher 2 des Objektes 1 ausgelesen. Innerhalb des ausgelesenen Transaktionsblockes TB wird eine Transaktion T₁₁, ... , T_{1N1}, T₂₁, ... T_{2N2}, ..., T_{M1}, ...T_{MNM} im Schritt S62 identifiziert. In einem weiteren Schritt S63 erfolgt eine Überprüfung der Gültigkeit der innerhalb des Transaktionsblockes TB₁, ... , TB_{M} enthaltenen Transaktion T₁₁, ... , T_{1N1}, T₂₁, ... T_{2N2}, ..., T_{M1}, ...T_{MNM}. Wird im Schritt S64 die betreffende Transaktion T₁₁, ... , T_{1N1}, T₂₁, ... T_{2N2}, ..., T_{M1}, ...T_{MNM} als valide bzw. gültig erkannt, wird sie im Schritt S65 als gültig akzeptiert und ggf. die darin beschriebene Maßnahme ausgeführt oder bestätigt. Wird im Schritt S64 die betreffende Transaktion T₁₁, ... , T_{1N1}, T₂₁, ... T_{2N2}, ..., T_{M1}, ...T_{MNM} als nicht valide erkannt, wird die betreffende Transaktion T₁₁, ... , T_{1N1}, T₂₁, ... T_{2N2}, ..., T_{M1}, ...T_{MNM} im Schritt S65 als ungültig verworfen. Der Vorgang endet im Schritt S66.

## Patentansprüche

1. Verfahren zum manipulationssicheren Speichern von Informationen bezüglich objektbezogener Maßnahmen,
wobei die das Objekt (1) betreffenden Maßnahmen als Transaktionen (T₁₁, ..., T_{1N1}, T₂₁, ... T_{2N2}, ..., T_{M1}, ...T_{MNM}) in Transaktionsblöcken (TB₁, ... , TB_{M}) enthalten sind, die miteinander in einer Transaktionsblockkette,TBK, des Objektes (1) verkettet werden, die in einem zu dem Objekt (1) zugeordneten Objektdatenspeicher (2) gespeichert wird,
wobei wenigstens eine Transaktion (T₁₁, ... , T_{1N1}, T₂₁, ... T_{2N2}, ..., T_{M1}, ...T_{MNM}) erfasst wird (S51), jede Transaktion (T₁₁, ... , T_{1N1}, T₂₁, ... T_{2N2}, ..., T_{M1}, ...T_{MNM}) einen Validierungsprogrammcode,VPC, enthält, wobei der VPC Regeln definiert, die angeben, welche Transaktionen zulässig sind und wobei jeder Transaktionsblock (TB₁, **.**.. , TB_{M}) mindestens eine Transaktion (T₁₁, ... , T_{1N1}, T₂₁, ... T_{2N2}, ..., T_{M1}, ...T_{MNM}) umfasst, die eine an dem Objekt (1) vorgenommene Maßnahme oder eine durch das Objekt (1) selbst vorgenommene Maßnahme angibt, wobei ein zusätzlicher Transaktionsblock (TB₁, ... , TB_{M-1}) nach seiner erfolgreichen Validierung mit dem am Ende der Transaktionsblockkette, TBK, des Objektes (1) befindlichen letzten Transaktionsblock (TB_{M}) verkettet wird, wobei die Transaktionsblockkette, TBK, eines Objektes (1) aus dem Objektdatenspeicher (2) des Objektes (1) ausgelesen wird und die in den Transaktionsblöcken (TB₁, ... , TB_{M}) der Transaktionsblockkette, TBK, enthaltenen Transaktionen (T₁₁, ... , T_{1N1}, T₂₁, ... T_{2N2}, ..., T_{M1}, ...T_{MNM}) anhand ihres jeweiligen Validierungsprogrammcodes, VPC, als zulässig verifiziert werden und wobei eine anhand ihres Validierungsprogrammcodes, VPC, als zulässig verifizierte Transaktion (T₁₁, ... , T_{1N1}, T₂₁,... T_{2N2}, ..., T_{M1}, ...T_{MNM}) zum Zeitpunkt des Einschreibens in den Objektdatenspeicher (2) des Objektes (1) und/oder zum Zeitpunkt des Auslesens aus dem Objektdatenspeicher (2) des Objektes (1) die Vornahme der Maßnahme an dem Objekt (1) bestätigt.

2. Verfahren nach Anspruch 1,
wobei die Transaktionsblöcke (TB₁, ... , TB_{M}) der Transaktionsblockkette, TBK, des Objektes (1) über eine kryptographische Hashfunktion (H) miteinander verkettet werden,
wobei für jedes Objekt (1) eine zugehörige individuelle Hashfunktion (H) verwendet wird oder für mehrere Objekte (1) einer Gruppe von Objekten eine zugehörige Hashfunktion (H) verwendet wird.

3. Verfahren nach Anspruch 1,
wobei die Transaktionsblöcke (TB₁, ..., TB_{M}) der Transaktionsblockkette, TBK, des Objektes (1) über Zeigeradressen miteinander verkettet werden.

4. Verfahren nach einem der vorangehenden Ansprüche 1 bis 3, wobei ein zusätzlicher Transaktionsblock (TB₁, ... , TB_{M-1}) für die Transaktionsblockkette, TBK, des Objektes (1) automatisch generiert wird, sobald ein vorgegebener Zeitraum endet oder die Anzahl der in dem letzten Transaktionsblock (TB_{M}) der Transaktionsblockkette, TBK enthaltenen Transaktionen (T₁₁, ..., T_{1N1}, T₂₁, ... T_{2N2}, ..., T_{M1}, ...T_{MNM}) einen Schwellenwert erreicht oder in Reaktion auf ein erfasstes Ereignis oder in Reaktion auf einen Nutzerbefehl.

5. Verfahren nach einem der vorangehenden Ansprüche 1 bis 4, wobei eine Transaktion (T₁₁, ... , T_{1N1}, T₂₁, ... T_{2N2}, ..., T_{M1}, ...T_{MNM}) aus einer Gruppe vorgegebener für das Objekt (1) zulässiger Transaktionen (T₁₁, ... , T_{1N1}, T₂₁, ... T_{2N2}, ..., T_{M1}, ...T_{MNM}) selektiert und in dem letzten Transaktionsblock (TB_{M}) der Transaktionsblockkette, TBK, gespeichert wird.

6. Verfahren nach einem der vorangehenden Ansprüche 1 bis 5, wobei jeder Transaktionsblock (TB₁, ... , TB_{M}) der Transaktionsblockkette, TBK, einen Zeitstempel (TS), eine digitale Signatur (SIG) und/oder einen Proof-of-Work-Nachweis erhält.

7. Verfahren nach Anspruch 6,
wobei ein zusätzlicher Transaktionsblock (TB₁, ... , TB_{M}) als gültig validiert wird, falls alle in dem Transaktionsblock (TB₁, ... , TB_{M}) enthaltenen Transaktionen (T₁₁, ... , T_{1N1}, T₂₁, ... T_{2N2}, ..., T_{M1}, ...T_{MNM} ) mittels ihres zugehörigen Validierungsprogrammcodes, VPC, als zulässig verifiziert werden.

8. Verfahren nach einem der vorangehenden Ansprüche 1 bis 7, wobei zumindest eine oder jede Transaktion (T₁₁, ... , T_{1N1}, T₂₁, ... T_{2N2}, ..., T_{M1}, ...T_{MNM}) einen öffentlichen Schlüssel (PK) eines Objektinhabers und eine Angabe eines für eine digitale Signatur (SIG) verwendeten Schlüsselalgorithmus (ALG) aufweist.

9. Verfahren nach einem der vorangehenden Ansprüche 1 bis 8, wobei mehrere Transaktionsblöcke (TB₁, ... , TB_{M-1}) der Transaktionsblockkette, TBK, eines Objektes (1) automatisch zu einem Transaktionsblock (TB_{M}) zusammengefasst werden, sobald ein vorgegebener Zeitraum endet oder die Anzahl der in der Transaktionsblockkette, TBK, enthaltenen Transaktionsblöcke (TB₁, ... , TB_{M-1}) einen Schwellenwert erreicht oder in Reaktion auf ein erfasstes Ereignis, insbesondere Speicherknappheit des Objektdatenspeichers (2), oder in Reaktion auf einen Nutzerbefehl.

10. System zur Steuerung und Überwachung von Maßnahmen, die an Objekten vornehmbar oder durch Objekte selbst vornehmbar sind,
wobei jedem Objekt (1) des Systems ein Objektdatenspeicher (2) zugeordnet ist, wobei die das Objekt (1) betreffenden Maßnahmen als Transaktionen (T₁₁, ... , T_{1N1}, T₂₁, ... T_{2N2}, ..., T_{M1}, ...T_{MNM}) in Transaktionsblöcken (TB₁, ... , TB_{M}) enthalten sind, welche miteinander in einer Transaktionsblockkette, TBK, des Objektes (1) verkettet sind, die in dem Objektdatenspeicher (2) des Objektes (1) gespeichert ist
wobei jede Transaktion (T₁₁, ... , T_{1N1}, T₂₁, ... T_{2N2}, ..., T_{M1}, ...T_{MNM}) einen Validierungsprogrammcode, VPC, enthält, wobei der VPC Regeln definiert, die angeben, welche Transaktionen (T₁₁, ... , T_{1N1}, T₂₁, ... T_{2N2}, ..., T_{M1}, ...T_{MNM}) zulässig sind und wobei jeder Transaktionsblock (TB₁, ... , TB_{M}) mindestens eine Transaktion (T₁₁, ... ,**T_{1N1},T₂₁,** ... T_{2N2}, ..., T_{M1}, ...T_{MNM}) umfasst, die eine an dem Objekt (1) vorgenommene Maßnahme oder eine durch das Objekt (1) selbst vorgenommene Maßnahme angibt. angibt, und wobei das System konfiguriert ist, um ein Verfahren nach einem der Ansprüche 1-9 durchzuführen.

11. System nach Anspruch 10,
wobei die Objekte (1) Hardwarekomponenten, insbesondere Geräte, und/oder Softwarekomponenten, insbesondere Dienstprogramme, aufweisen.

## Claims

1. Method for tamper-proof storage of information in respect of object-related measures,
wherein the measures relating to the object (1) are contained as transactions (T₁₁, ..., T_{1N1}, T₂₁, ... T_{2N2}, ..., T_{M1}, ...T_{MNM}) in transaction blocks (TB₁, ..., TB_{M}) that are linked together in a transaction blockchain, TBK, of the object (1), said transaction blockchain being stored in an object data memory (2) assigned to the object (1),
wherein at least one transaction (T₁₁, ..., T_{1N1}, T₂₁, ... T_{2N2}, ..., T_{M1}, ...T_{MNM}) is captured (S51), each transaction (T₁₁, ..., T_{1N1}, T₂₁, ... T_{2N2}, ..., T_{M1}, ...T_{MNM}) contains a validation program code, VPC, wherein the VPC defines rules that specify which transactions are admissible and wherein each transaction block (TB₁, ..., TB_{M}) comprises at least one transaction (T₁₁, ..., T_{1N1}, T₂₁, ... T_{2N2}, ..., T_{M1}, ...T_{MNM}) that specifies a measure undertaken on the object (1) or a measure undertaken by the object (1) itself, wherein an additional transaction block (TB₁, ..., TB_{M-1}), following its successful validation, is linked to the last transaction block (TB_{M}) situated at the end of the transaction blockchain, TBK, of the object (1), wherein the transaction blockchain, TBK, of an object (1) is read from the object data memory (2) of the object (1) and the transactions (T₁₁, ..., T_{1N1}, T₂₁, ... T_{2N2}, ..., T_{M1}, ...T_{MNM}) contained in the transaction blocks (TB₁, ..., TB_{M}) of the transaction blockchain, TBK, are verified as admissible on the basis of their respective validation program code, VPC, and wherein a transaction (T₁₁, ..., T_{1N1}, T₂₁, ... T_{2N2}, ..., T_{M1}, ...T_{MNM}) verified as admissible on the basis of its validation program code, VPC, at the time of writing to the object data memory (2) of the object (1) and/or at the time of reading from the object data memory (2) of the object (1) confirms the measure being undertaken on the object (1).

2. Method according to Claim 1,
wherein the transaction blocks (TB₁, ..., TB_{M}) of the transaction blockchain, TBK, of the object (1) are linked together by way of a cryptographic hash function (H),
wherein an associated individual hash function (H) is used for each object (1) or wherein an associated hash function (H) is used for a plurality of objects (1) of a group of objects.

3. Method according to Claim 1,
wherein the transaction blocks (TB₁, ..., TB_{M}) of the transaction blockchain, TBK, of the object (1) are linked together by way of pointer addresses.

4. Method according to any one of the preceding Claims 1 to 3,
wherein an additional transaction block (TB₁, ..., TB_{M-1}) for the transaction blockchain, TBK, of the object (1) is generated automatically as soon as a predetermined time period ends or as soon as the number of transactions (T₁₁, ..., T_{1N1}, T₂₁, ... T_{2N2}, ..., T_{M1}, ...T_{MNM}) contained in the last transaction block (TB_{M}) of the transaction blockchain, TBK, reaches a threshold or in response to a detected event or in response to a user command.

5. Method according to any one of the preceding Claims 1 to 4,
wherein a transaction (T₁₁, ..., T_{1N1}, T₂₁, ... T_{2N2}, ..., T_{M1}, ...T_{MNM}) is selected from a group of predetermined transactions (T₁₁, ..., T_{1N1}, T₂₁, ... T_{2N2}, **...,** T_{M1}, ...T_{MNM}) that are admissible for the object (1) and said transaction is stored in the last transaction block (TB_{M}) of the transaction blockchain, TBK.

6. Method according to any one of the preceding Claims 1 to 5,
wherein each transaction block (TB₁, ..., TB_{M}) of the transaction blockchain, TBK, receives a timestamp (TS), a digital signature (SIG) and/or proof-of-work evidence.

7. Method according to Claim 6,
wherein an additional transaction block (TB₁, ..., TB_{M}) is validated as valid should all transactions (T₁₁, ..., T_{1N1}, T₂₁, ... T_{2N2}, ..., T_{M1}, ...T_{MNM}) contained in the transaction block (TB₁, ..., TB_{M}) be verified as admissible by means of their associated validation program code, VPC.

8. Method according to any one of the preceding Claims 1 to 7,
wherein at least one, or each, transaction (T₁₁, ..., T_{1N1}, T₂₁, ... T_{2N2}, ..., T_{M1}, ...T_{MNM}) has a public key (PK) of an object owner and a specification of a key algorithm (ALG) used for a digital signature (SIG).

9. Method according to any one of the preceding Claims 1 to 8,
wherein a plurality of transaction blocks (TB₁, ..., TB_{M-1}) of the transaction blockchain, TBK, of an object (1) are automatically combined to form a transaction block (TB_{M}) as soon as a predetermined time period ends or as soon as the number of transaction blocks (TB₁, ..., TB_{M-1}) contained in the transaction blockchain, TBK, reaches a threshold or in response to a detected event, in particular when memory in the object data memory (2) runs low, or in response to a user command.

10. System for controlling and monitoring measures that can be undertaken on objects or that can be undertaken by objects themselves,
wherein an object data memory (2) is assigned to each object (1) of the system, wherein the measures relating to the object (1) are contained as transactions (T₁₁, ..., T_{1N1}, T₂₁, ... T_{2N2}, ..., T_{M1}, ...T_{MNM}) in transaction blocks (TB₁, ..., TB_{M}) that are linked together in a transaction blockchain, TBK, of the object (1), said transaction blockchain being stored in the object data memory (2) of the object (1),
wherein each transaction (T₁₁, ..., T_{1N1}, T₂₁, ... T_{2N2}, ..., T_{M1}, ...T_{MNM}) contains a validation program code, VPC, wherein the VPC defines rules that specify which transactions (T₁₁, ..., T_{1N1}, T₂₁, ... T_{2N2}, ..., T_{M1}, ...T_{MNM}) are admissible and wherein each transaction block (TB₁, ..., TB_{M}) comprises at least one transaction (T₁₁, ..., T_{1N1}, T₂₁, ... T_{2N2}, ..., T_{M1}, ...T_{MNM}) that specifies a measure undertaken on the object (1) or a measure undertaken by the object (1) itself, and wherein the system is configured to carry out a method according to any one of Claims 1-9.

11. System according to Claim 10,
wherein the objects (1) comprise hardware components, more particularly devices, and/or software components, more particularly utility software.

## Revendications

1. Procédé de mise en mémoire, protégé à l'encontre de la fraude, d'informations en ce qui concerne des mesures se rapportant à un objet,
dans lequel les mesures concernant l'objet (1) sont contenues sous la forme de transactions (T₁₁, ..., T_{1N1}, T₂₁, ..., T_{2N2}, ..., T_{M1}, ..., T_{MNM}) dans des blocs (TB₁, ..., TB_{M}) de transactions, qui sont enchaînés entre eux en une chaîne de blocs de transactions, TBK, de l'objet (1) que l'on met en mémoire dans une mémoire (2) de données d'objet associée à l'objet (1),
dans lequel on saisit (S51) au moins une transaction (T₁₁, ..., T_{1N1}, T₂₁, ..., T_{2N2}, ..., T_{M1}, ..., T_{MNM}), chaque transaction (T₁₁, ..., T_{1N1}, T₂₁, ..., T_{2N2}, ..., T_{M1}, ..., T_{MNM}) contient un code de programme de validation, VPC, dans lequel le VPC définit des règles, qui indiquent les transactions qui sont admissibles et dans lequel chaque bloc (TB₁, ..., TB_{M}) de transactions comprend au moins une transaction (T₁₁, ..., T_{1N1}, T₂₁, ..., T_{2N2}, ..., T_{M1}, ..., T_{MNM}), qui indique une mesure effectuée sur l'objet (1) ou une mesure effectuée par l'objet (1) lui-même, dans lequel on enchaîne un bloc (TB₁, ..., TB_{M-1}) de transactions supplémentaire après sa validation couronnée de succès au dernier bloc (TB_{M}) de transactions se trouvant au bout de la chaîne de blocs de transactions, TBK, de l'objet (1), dans lequel on lit la chaîne de blocs de transactions, TBK, d'un objet (1) dans la mémoire (2) de données de l'objet (1) et on vérifie comme admissible les transactions (T₁₁, ..., T_{1N1}, T₂₁, ..., T_{2N2}, ..., T_{M1}, ..., T_{MNM}) contenues dans les blocs (TB₁, ..., TB_{M}) de transactions de la chaîne de blocs de transactions, TBK, à l'aide de son code de programme de validation, VPC, respectif et dans lequel une transaction (T₁₁, ..., T_{1N1}, T₂₁, ..., T_{2N2}, ..., T_{M1}, ..., T_{MNM}) vérifiée comme admissible à l'aide de son code de programme de validation, VPC, à l'instant de l'inscription dans la mémoire (2) de l'objet (1) et/ou à l'instant de la lecture dans la mémoire (2) de données de l'objet (1) confirme l'exécution de la mesure sur l'objet (1).

2. Procédé suivant la revendication 1,
dans lequel on enchaîne entre eux les blocs (TB₁, ..., TB_{M}) de transactions de la chaîne de blocs de transactions, TBK, de l'objet (1) par une fonction (H) de hachage cryptographique,
dans lequel on utilise pour chaque objet (1) une fonction (H) de hachage individuelle associée, ou on utilise pour plusieurs objets (1) d'un groupe d'objets, une fonction (H) de hachage lui appartenant.

3. Procédé suivant la revendication 1,
dans lequel on enchaîne entre eux les blocs (TB₁, ..., TB_{M}) de transactions de la chaîne de blocs de transactions, TBK, de l'objet (1) par des adresses de pointeur.

4. Procédé suivant l'une des revendications 1 à 3 précédentes,
dans lequel on crée automatiquement un bloc (TB₁, ..., TB_{M-1}) de transactions supplémentaires pour la chaîne de blocs de transactions, TBK, de l'objet (1), dès qu'un laps de temps donné à l'avance se termine ou dès que le nombre des transactions (T₁₁, ..., T_{1N1}, T₂₁, ..., T_{2N2}, ..., T_{M1}, ..., T_{MNM}) contenues dans le dernier bloc (TB_{M}) de transactions de la chaîne de blocs de transactions, TBK, atteint une valeur de seuil ou en réaction à la détection d'un événement ou en réaction à une instruction d'un utilisateur.

5. Procédé suivant l'une des revendications 1 à 4 précédentes,
dans lequel on sélectionne une transaction (T₁₁, ..., T_{1N1}, T₂₁, ..., T_{2N2}, ..., T_{M1}, ..., T_{MNM}) dans un groupe de transactions (T₁₁, ..., T_{1N1}, T₂₁, ..., T_{2N2}, ..., T_{M1}, ..., T_{MNM}) donné à l'avance et admissible pour l'objet (1) et on la met en mémoire dans le dernier bloc (TB_{M}) de transactions de la chaîne de blocs de transaction, TBK.

6. Procédé suivant l'une des revendications 1 à 5 précédentes, dans lequel chaque bloc (TB₁, ..., TB_{M}) de transactions de la chaîne de blocs de transactions, TBK, reçoit un horodatage (TS), une signature (SIG) numérique et/ou une justification proof-of-work.

7. Procédé suivant la revendication 6,
dans lequel on valide comme valable un bloc (TB₁, ..., TB_{M}) de transactions supplémentaire si on vérifie comme admissibles toutes les transactions (T₁₁, ..., T_{1N1}, T₂₁, ..., T_{2N2}, ..., T_{M1}, ..., T_{MNM}) contenues dans le bloc (TB₁, ..., TB_{M}) de transactions au moyen du code de programme de validation, VPC, lui appartenant.

8. Procédé suivant l'une des revendications 1 à 7 précédentes,
dans lequel au moins une ou chaque transaction (T₁₁, ..., T_{1N1}, T₂₁, ..., T_{2N2}, ..., T_{M1}, ..., T_{MNM}) a une clé (PK) publique d'un possesseur de l'objet et une indication d'un algorithme (ALG) de clé utilisé pour une signature (SIG) numérique.

9. Procédé suivant l'une des revendications 1 à 8 précédentes,
dans lequel on rassemble plusieurs blocs (TB₁, ..., TB_{M-1}) de transactions de la chaîne de blocs de transactions, TBK, d'un objet (1) automatiquement en un bloc (TB_{M}) de transactions dès qu'un laps de temps donné à l'avance se termine ou dès que le nombre des blocs (TB₁, ..., TB_{M-1}) de transactions contenus dans la chaîne de blocs de transactions, TBK, atteint une valeur de seuil ou en réaction à la détection d'un événement, notamment d'une pénurie de mémoire de la mémoire (2) de données d'objet, ou en réaction à une instruction d'un utilisateur.

10. Systèmes de commande et de contrôle de mesure, qui peuvent être effectuées sur des objets ou qui peuvent être effectuées par des objets eux-mêmes,
dans lequel une mémoire (2) de données d'objet est associée à chaque objet (1) du système, dans lequel les mesures concernant l'objet (1) sont contenues sous la forme de transactions (T₁₁, ..., T_{1N1}, T₂₁, ..., T_{2N2}, ..., T_{M1}, ..., T_{MNM}) dans des blocs (TB₁, ..., TB_{M}) de transactions, qui sont enchaînés entre eux en une chaîne de blocs de transactions, TBK, de l'objet (1), qui est mise en mémoire dans la mémoire (2) de données de l'objet (1)
dans lequel chaque transaction (T₁₁, ..., T_{1N1}, T₂₁, ..., T_{2N2}, ..., T_{M1}, ..., T_{MNM}) contient un code de programme de validation, VPC, dans lequel le VPC définit des règles, qui indiquent les transactions (T₁₁, ..., T_{1N1}, T₂₁, ..., T_{2N2}, ..., T_{M1}, ..., T_{MNM}) qui sont admissibles et dans lequel chaque bloc (TB₁, ..., TB_{M}) de transactions comprend au moins une transaction (T₁₁, ..., T_{1N1}, T₂₁, ..., T_{2N2}, ..., T_{M1}, ..., T_{MNM}), qui indique une mesure effectuée sur l'objet (1) ou une mesure effectuée par l'objet (1) lui-même, et dans lequel le système est configuré pour effectuer un procédé suivant l'une des revendications 1 à 9.

11. Système suivant la revendication 10, dans lequel les objets (1) ont des composants de matériel, notamment des appareils, et/ou des composants de logiciels, notamment des programmes de service.
